# EUROPEAN PATENT SPECIFICATION

(11) **EP 2 682 298 B1**
(45) Date of publication and mention of the grant of the patent: **01.03.2017**
(21) Application number: 13183115.8
(22) Date of filing: 30.04.2008
(51) Int. Cl.: B60L 1/00, H02J 7/34

(54) **Electrical energy storing system and corresponding engine vehicle**
Elektrisches Energiespeichersystem und entsprechendes Motorfahrzeug
Système de stockage d'énergie électrique et véhicule à moteur correspondant

(43) Date of publication of application: 08.01.2014
(62) Divisional of application: 08155463.6
(73) Proprietor: Iveco France S.A., 69200 Vénissieux (FR)
(72) Inventor: Codron, Stéphane, 69008 Lyon (FR)
(74) Representative: Franzolin, Luigi

(56) References cited:
- EP-A- 1 253 698
- EP-A- 1 571 748
- WO-A-02/066293
- WO-A-2004/070911

## Description

The present invention relates to an electrical energy storing system and to an engine vehicle implementing such an electrical energy storing system.

An engine vehicle, such as for example a motor bus comprises a combustion motor or engine which is coupled with at least one and preferably two alternators and with an engine starter. It also comprises a battery set, which is usually composed of two batteries. These batteries have mainly two goals. The first one is to power the starter to start the engine. The second goal is to power the electrical equipments when the alternators are not in use.

In a standard way of utilization, the buses are compelled to stop very often and especially at each bus stop. It has been established that the stop time represents approximately one third of their use time.

However, during these slowing phases, the energetic throughput is the worst. The energy waste is maximal as the energy of the motor bus is transformed by heat by the brakes. Indeed, the state of charge of the battery set naturally decreases. Therefore the need exists for recovering this available energy for using it when needed.

### Summary of the invention

It is a particular object of the present invention to achieve this objective.

To this end, the invention concerns an electrical energy storing system for an engine vehicle, comprising a brake pedal, an accelerator pedal and an engine starter, an alternator and electrical equipments connected to an electrical circuit of the vehicle, the electrical energy storing system comprising at least:
- an internal electrical circuit, intended to be connected to said electrical circuit,
- a capacitor set comprising at least one capacitor and being connected to the internal electrical circuit,
- only one controlled switch between the capacitor set and the internal electrical circuit, and
- a battery set connected to the controlled switch
- a control unit adapted to control the controlled switch
characterized in that said control unit is configured so that If the brake pedal of the motor vehicle is not activated and if the acceleration pedal is activated, the capacitor set is charged with a current available from the alternator set if the engine speed is greater than a minimum threshold value and if the charge of the capacitor set is lower than a further threshold value, wherein said minimum threshold value is an idling speed of the engine and said further threshold is the maximum energy threshold value to which the capacitor set can be charged.

One advantage of this present invention is the possibility to charge the capacitor set with free energy when the vehicle is slowing down. Another advantage of the presence of the capacitor set is to preserve the battery set and increase the battery life time in order to be able to downsize the battery set.

The invention relates also to an engine vehicle, comprising said electrical energy storing system.

Another object of the present invention is a method of managing said electrical energy storing system.

According to the invention, the engine vehicle comprises a first controlled switch connected between the capacitor set and the electrical circuit and a second controlled switch connected between, on the one hand, the battery set, and, on the other hand, the capacitor set and the electrical circuit. According to the invention, the engine vehicle comprises a diode connected in parallel to the second controlled switch, the diode being direct conducting towards the battery set.

Thanks to the diode, the battery set is continuously charged. Further more, its discharging is avoided.

According to the invention, the engine vehicle comprises a central unit adapted to communicate with the control unit.

According to the invention, the control unit is adapted to control the capacitor set charge.

According to the invention, the control unit is adapted to charge the capacitor set when the vehicle is in a decelerating phase.

According to the invention, the internal circuit of the system comprises a first branch intended to be connected to the electrical circuit and a second branch intended to be connected to a battery set.

According to the invention, the first branch comprises the first controlled switch and the second branch comprises a second controlled switch controlled by the control unit.

According to the invention, the capacitor set comprises capacitors connected in series.

According to the invention, said one controlled switch comprises power transistors connected in parallel.

According to the invention, the control unit comprises communication means adapted to communicate with a central unit of the vehicle.

According to the invention, the capacitor set, said one controlled switch and the control unit are located in the same housing.

According to the present invention, the electrical energy storing system is connected between the battery set and the electrical circuit.

The various above aspects, embodiments or objects of the invention may be combined in various ways with each others, provided the combined aspects, embodiments or objects are not incompatible or mutually exclusive, therefore, the claims describe embodiments of the present invention.

WO 02/066293 discloses an electrical ener storing system for an engine vehicle.

### List of the figures

Other aspects and advantages of the present invention will be apparent from the following detailed description made in conjunction with the accompanying drawing illustrating schematically some non-limitative embodiments of the invention.
Figure 1 is a schematic view of an engine vehicle power unit comprising an electrical energy storing system according to the present invention;
Figure 2 is a schematic view of a L-shaped electrical energy storing system according to the present invention. Corresponding reference numbers indicate corresponding components in the various embodiments illustrated in the drawings.

### Detailed description

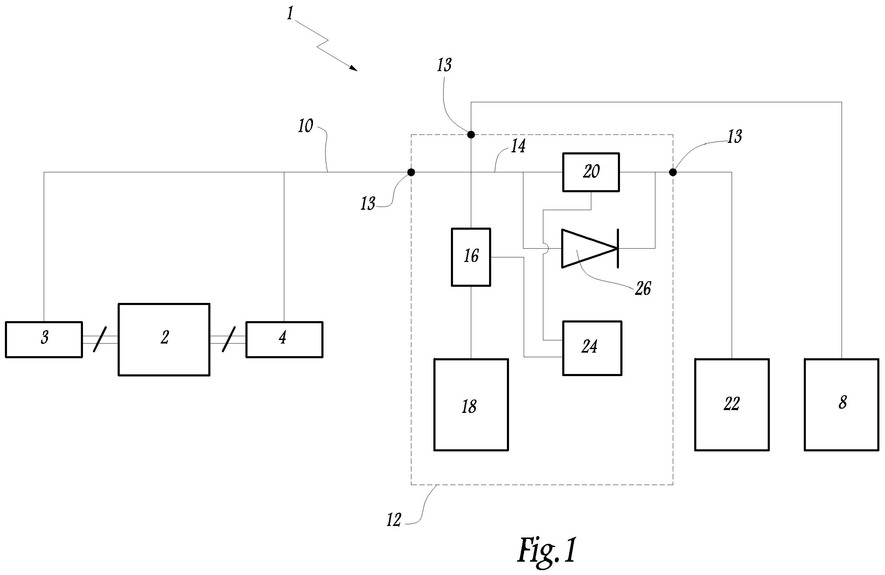

Figure 1 illustrates a block diagram of a motor vehicle power unit 1. This power unit 1 comprises an engine 2 which is coupled with an engine starter 3 and a set of alternators 4. The power unit 1 comprises also electrical equipments 8, which includes, for instance, the air conditioning, head
lights, inside lights and the radio. The engine starter 3, the set of alternators 4 and the electrical equipments 8 are connected to an electrical circuit 10.

The power unit 1 includes also an electrical energy storing system 12. This system 12 comprises an internal electrical circuit 14, which is connected to the electrical circuit 10 thanks to three contact terminals 13. A first controlled switch 16 is connected to the internal electrical circuit 14. For example, this controlled switch could be power transistors connected in parallel.

A capacitor set 18 is connected to the controlled switch 16. This capacitor set could be composed of a plurality of capacitor set connected in series. Indeed, this kind of power sources can be charged quickly and can perform a very large number of charging and discharging cycles. Further more, ultracapacitors are capacitors able to reach capacities as high as 5000 F.

The electrical energy storing system 12 includes a second controlled switch 20 connected to the internal electrical circuit 14.

A battery set 22 is connected to this second controlled switch 20, whose architecture could be the same as the first controlled switch 16. The battery set 22 is coupled to the internal electrical circuit 14 thanks to one of the contact terminal 13. On a motor bus, two batteries are often used.

A control unit 24 is connected to both controlled switches 16, 20. This control unit 24 is an electronics device adapted at least to control the controlled switches 16, 20, according to the state of charge of the capacitor set 18. Further more, the control unit 24 is preferably adapted for receiving information from a central unit, not represented in figure 1. Such information could be the state of the vehicle, that is to say, for instance, if it is in an accelerating or decelerating phase.

The implementation of the ultracapacitors increases the life time of the battery set 22 which is less stressed to do cycles. This implementation allows stopping the engine 2 when the vehicle is not moving, and to restart it when needed by using only the energy of the ultracapacitors and therefore by preserving the battery set 22. This has the consequence that a reduction of the battery size could be done.

Further more, the use of the ultracapacitor allows to start the engine 2 even if the battery set state of charge is too low for providing the requested current intensity. Indeed, it is possible to first charge the capacitor set with a low current from the battery set 22 and then use the energy of the capacitor set which are able to provide high current without being damaged.

One of the main aspect of the present invention is that it is possible to charge the ultracapacitors when the vehicle is in a decelerating phase and when the engine does not use fuel. This means that the capacitor charge is proceeded using free energy. This energy would be anyway lost.

An example of a functioning algorithm of the power unit 1 is described here below. The functioning will be given with only the presence of the second controlled switch 20, that is to say without the first controlled switch 16.

If the brake pedal of the motor vehicle is not activated and if the acceleration pedal is activated, the capacitor set 18 is charged with a current available from the alternator set 4 if the engine speed is greater than a minimum threshold value S1 and if the charge of the capacitor set 18 is lower than a threshold value C1. S1 represents the idling speed of the engine 2 and C1 is the maximum energy threshold value to which the capacitor set 18 can be charged. The C1 value is put between 60% and 90% of the maximal charge value of the capacitors, and preferably between 65% and 80%. Such a charge value will guarantee an increase of the capacitor life time. If the charge of the capacitor set 18 is greater than this threshold value C1, the current is put to zero. In this case, the controlled switch 20 is open. This means that no current contribution is given by the battery set 22. In other words, the gas oil consumption decreases.

If the engine speed is lower than the threshold value S1 and if the capacitor set charge is greater than a threshold value C2, the controlled switch 20 is open. C2 is a minimum energy threshold value under which the controlled switch 20 has to be closed. No contribution is given by the battery set 22. If its charge is lower than C2, the controlled switch is closed. This means that the battery set 22 is used to supply the electrical equipments 8.

If the engine is considered to be stopped, that is to say that its speed is lower than a threshold value S2, and if the capacitor set charge is lower than a threshold value C3 necessary to start the engine 6, it is requested to start the engine 6 by using the battery set 22.

If the capacitor set charge is greater than the threshold value C3, the capacitor set 18 takes the place of the alternator set 4. This means that there is no contribution from the alternators.

It must be understood that when the vehicle is not moving, either the engine is stopped or not. If the engine 2 is stopped, the energy stored by the capacitor set 18 is used for powering the electrical equipments 8 and restarting the engine 2. If the engine is still running, the energy stored by the capacitor set 18 is used for powering the electrical equipments 8 instead of the alternator set 4. Therefore the mechanical load of the engine decreases, which has for consequence a decrease of the gas oil consumption.

If the acceleration pedal is not activated and if the engine speed is greater than the threshold value S1, the control unit 24 gives the command to charge the capacitor set 18 with a current contribution from the alternator set 4. The controlled switch 20 is open. The charge step of the capacitor set is done by using free energy.

If the engine speed is greater than the threshold value S2, the capacitor set 18 is discharged if its charge is greater than C2, with the controlled switch 20 open. Otherwise, it is closed.

If the engine speed is lower than S2 and if the capacitor set 18 is lower than C3, the engine has to be restarted with the battery set 22. On the contrary, if the capacitor set charge is greater than C3, the controlled switch 20 is open. The battery set 22 is not used. Otherwise, it is closed.

If the brake pedal is activated and if the engine speed is greater than S1, the capacitor set 18 is charged and the controlled switch 20 is closed. In this case again, the energy used to charge the capacitor set is free.

On the contrary, if the speed engine is lower than S1 but greater than S2, the ultracapacitors are discharged if their charge is greater than C2. The controlled switch 20 is open. If the charge is lower than C2, the controlled switch 20 is closed. The battery set is then used.

If the speed engine is lower than S2 and if the capacitor charge is greater than C2, the controlled switch 20 is open. Otherwise, it is closed.

If the capacitor charge is lower than C3, it is requested to restart the engine 6. If the charge is greater than C2, the controlled switch 20 is open. Otherwise, it is closed.

Each time the controlled switch 20 is open, there is no contribution from the battery set 22. The battery life duration is then directly improved.

Advantageously the controlled switch 16 could be implemented. For example, it can then isolate the capacitor set 18 from the internal electrical circuit 14 when the battery set 22 is used.

An advantageous embodiment of the electrical energy storing system 12 is to add a power diode 26. This power diode 26 is connected in parallel to the controlled switch 20. The diode 26 is connected in direct conducting way towards the battery set 22. This diode 26 enables a continuous charging of the battery set 22 and also avoids its discharging when its contribution is not requested.

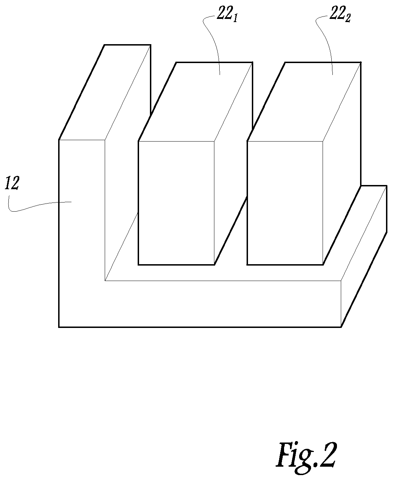

Figure 2 shows a specific L-shaped electrical energy storing system 12. This L-shaped system can be used in a motor bus in association with two batteries 22₁, 22₂. The L-shaped system can comprise the capacitor set 18, the controlled switch 16, 20 and the control unit 24 in the same housing. As described above, the batteries 22₁, 22₂ are less stressed during the vehicle use by adding the electrical energy storing system 12. This enables to downsize the batteries. In term of weight and size, the association of the electrical energy storing system 12 and the batteries 22₁, 22₂ is equivalent of the battery set of the state of the art. This means that retrofit could be easily done on motor bus equipped by the former battery set.

While the invention has been shown and described with reference to certain embodiments thereof, it would be understood by those skilled in the art that changes in form and details may be therein without departing from the spirit and scope of the invention as defined in the amended claims.

## Claims

1. Electrical energy storing system (12) for an engine vehicle (2) comprising a brake pedal, an accelerator pedal and an engine starter (3), an alternator (4) and electrical equipments (8) connected to an electrical circuit (10) of the vehicle, the electrical energy storing system (12) comprising at least:
- an internal electrical circuit (14), intended to be connected to said electrical circuit (10),
- a battery set (22);
- a capacitor set (18) comprising at least one capacitor and being connected to the internal electrical circuit (14),
- only one controlled switch (20) connected between the battery set (12) and the internal electrical circuit (14), and
- a control unit (24) adapted to control the controlled switch (20) according to the state of charge of capacitor set (18),
**characterized in that** said control unit (24) is configured so that if the brake pedal of the motor vehicle is not activated and if the acceleration pedal is activated, the capacitor set (18) is charged with a current available from the alternator set (4) if the engine speed is greater than a minimum speed threshold value (S1) and if the charge of the capacitor set (18) is lower than a further energy threshold value (C1), wherein said minimum speed threshold value (S1) is an idling speed of the engine (2) and said further energy threshold (C1) is the maximum energy threshold value to which the capacitor set (18) can be charged;
wherein said control unit (24) is also configured so that if the speed engine is lower than said minimum speed threshold value (S1) and if the capacitor charge is greater than a further second energy threshold value (C2), the controlled switch (20) is open; said second threshold energy value (C2) is a minimum energy threshold value under which the controlled switch (20) has to be closed;
said control unit (24) being configured so that, if the charge of the capacitor set (18) is greater than said energy threshold value (C1), said controlled switch (20) is open.

2. System according to claim 1, wherein the control unit (24) is also adapted to charge the capacitor set (18) when the vehicle is in a decelerating phase.

3. The electrical energy storing system according to claim 1 or 2, wherein said further energy threshold value (C1) value is put between 60% and 90% of the maximal charge value of the capacitors, and preferably between 65% and 80%.

4. The electrical energy storing system according to claim 3, wherein if the engine is stopped and if the capacitor charge is lower than a energy third threshold (C3) necessary to start the engine (6), it is requested to start the engine (6) by using the battery set (22), the controlled switch (20) being closed.

5. The electrical energy storing system according to any of the preceding claims 1 to 3, wherein a diode (26) is connected in parallel to the controlled switch (20), the diode being direct conducting towards the battery set (22).

6. The electrical energy storing system according to any of the preceding claims, wherein the capacitor set (18) comprises capacitors connected in series.

7. The electrical energy storing system according to any of the preceding claims, wherein said controlled switch (20) comprises power transistors connected in parallel.

8. The electrical energy storing system according to any of the preceding claims, wherein the control unit (24) comprises communication means adapted to communicate with a central unit of the vehicle.

9. The electrical energy storing system according to any of the preceding claims, wherein the capacitor set (18), said controlled switch (20) and the control unit (24) are located in the same housing.

10. Engine for an engine vehicle comprising a brake pedal, an accelerator pedal and an engine starter (3), an alternator (4) and electrical equipments (8) connected to an electrical circuit (10) of the vehicle, the electrical energy storing system (12), the engine **characterized in** comprising an electrical energy storing system (12) according to one of the previous claims from 1 to 8.

11. Method of managing an electrical energy storing system (12) as disclosed in any of the claims from 1 to 9, comprising the following checks/steps:
- the brake pedal of the motor vehicle is not activated,
- the acceleration pedal is activated,
- the engine speed is greater than a minimum speed threshold value (S1) and
- the charge of the capacitor set (18) is lower than a further energy threshold value (C1);
if all the previous checks are verified, the charging of the capacitor set (18) with a current available from the alternator set (4) is executed, wherein said minimum speed threshold value (S1) is an idling speed of the engine (2) and said further energy threshold (C1) is the maximum energy threshold value to which the capacitor set (18) can be charged;
the method further comprising the steps of checking if:
a) the speed engine is lower than said minimum speed threshold value (S1); and
b) the capacitor charge is greater than said second energy threshold value (C2),
if all the previous a) and b) checks are verified, then the controlled switch (20) is opened.

12. Method according to claim 11, further comprising the step of charging the capacitor set (18) when the vehicle is in a decelerating phase.

13. Method according to claim 11 or 12, wherein said further threshold (C1) value is put between 60% and 90% of the maximal charge value of the capacitors, and preferably between 65% and 80%.

## Patentansprüche

1. Elektrisches Energiespeichersystem (12) für ein Motorfahrzeug (2), umfassend ein Bremspedal, ein Beschleunigungspedal und einen Anlasser (3), einen Wechselstromgenerator (4) und elektrische Geräte (8), welche an einen elektrischen Schaltkreis (10) des Fahrzeugs angeschlossen sind; welches elektrische Energiespeichersystem (12), mindestens umfasst:
- einen inneren elektrischen Schaltkreis (14), dazu vorgesehen, an den elektrischen Schaltkreis (10) angeschlossen zu werden,
- einen Batteriesatz (22),
- einen Kondensatorsatz (18), welcher mindestens einen Kondensator umfasst und der an dem inneren elektrischen Schaltkreis (14) angeschlossen ist,
- nur einen gesteuerten Schalter (20), der zwischen dem Batteriesatz und dem inneren elektrischen Schaltkreis (14) angeschlossen ist, und
- eine Steuereinheit (24), dazu geeignet, den gesteuerten Schalter (20) in Abhängigkeit vom Ladezustand des Kondensatorsatzes zu steuern,
**dadurch gekennzeichnet, dass** die Steuereinheit (24) so konfiguriert ist, dass dann, wenn das Bremspedal des Motorfahrzeugs nicht aktiviert ist und das Beschleunigungspedal aktiviert ist, der Kondensatorsatz (18) mit einem Strom vom Wechselstromgenerator (4) geladen wird, falls die Motorgeschwindigkeit größer als ein minimaler Geschwindigkeitsgrenzwert (S1) ist und falls die Ladung des Kondensatorsatzes (18) niedriger ist als ein weiterer Energiegrenzwert (C1), wobei der minimale Geschwindigkeitsgrenzwert (S1) eine Leerlaufgeschwindigkeit des Motors (2) ist, und der weitere Energiegrenzwert (C1) der maximale Energiegrenzwert ist, bis zu dem der Kondensatorsatz geladen werden kann;
wobei die Steuereinheit (24) so konfiguriert ist, dass dann, wenn die Motorgeschwindigkeit kleiner ist als der minimale Geschwindigkeitsgrenzwert (S1) und die Kondensatorladung größer ist als ein weiterer, zweiter Energiegrenzwert (C2), der gesteuerte Schalter (20) geöffnet ist;
wobei der zweite Energiegrenzwert (C2) ein minimaler Energiegrenzwert ist, unter welchem der gesteuerten Schalter (20) geschlossen werden muss;
und die Steuereinheit (24) so konfiguriert ist, dass dann, wenn die Ladung des Kondensatorsatzes (18) größer ist als der Energiegrenzwert (C1), der gesteuerte Schalter (20) offen ist.

2. System gemäß Anspruch 1, wobei die Steuereinheit (24) ferner dazu geeignet ist, den Kondensatorsatz (18) zu laden, wenn sich das Fahrzeug in einer Verzögerungsphase befindet.

3. Elektrisches Energiespeichersystem gemäß Anspruch 1 oder 2, wobei der weitere Energiegrenzwert (C1) zwischen 60% und 90% der maximalen Kapazität der Kondensatoren festgelegt ist, und vorzugsweise zwischen 65% und 80%.

4. Elektrisches Energiespeichersystem gemäß Anspruch 3, wobei dann, wenn der Motor gestoppt ist und die Kondensatorladung kleiner ist als ein dritter Energiegrenzwert (C3), der benötigt wird, um den Motor (2) zu starten, der Motor über den Batteriesatz (22) gestartet werden kann, wobei der gesteuerte Schalter (20) geschlossen ist.

5. Elektrisches Energiespeichersystem gemäß einem der vorhergehenden Ansprüche 1 bis 3, wobei eine Diode (26) parallel zum gesteuerten Schalter (20) geschaltet ist; welche Diode derart geschaltet ist, dass die Durchlassrichtung in Richtung des Batteriesatzes (22) weist.

6. Elektrisches Energiespeichersystem gemäß einem der vorhergehenden Ansprüche, wobei der Kondensatorsatz (18) Kondensatoren umfasst, die in Serie geschaltet sind.

7. Elektrisches Energiespeichersystem gemäß einem der vorhergehenden Ansprüche, wobei der gesteuerte Schalter (20) Leistungstransistoren umfasst, die parallel geschaltet sind.

8. Elektrisches Energiespeichersystem gemäß einem der vorhergehenden Ansprüche, wobei die Steuereinheit (24) Kommunikationsmittel umfasst, dazu vorgesehen, mit einer zentralen Einheit des Fahrzeugs zu kommunizieren.

9. Elektrisches Energiespeichersystem gemäß einem der vorhergehenden Ansprüche, wobei sich der Kondensatorsatz (18), der gesteuerte Schalter (20) und die Steuereinheit (24) in demselben Gehäuse befinden.

10. Motor für ein Motorfahrzeug, welches ein Bremspedal, ein Beschleunigungspedal und einen Anlasser (3), einen Wechselstromgenerator (4) und elektrische Geräte (8), welche an einen elektrischen Schaltkreis (10) des Fahrzeugs angeschlossen sind, und ein elektrisches Energiespeichersystem (12), welcher Motor (2), **dadurch gekennzeichnet ist, dass** dieser ein elektrisches Energiespeichersystem (12) gemäß einem der vorhergehenden Ansprüche 1 bis 8 umfasst.

11. Verfahren zur Verwaltung eines elektrischen Energiespeichersystems (12) gemäß einem der Ansprüche 1 bis 9, welches die folgenden Überprüfungen/Schritte beinhaltet:
- das Bremspedal des Fahrzeugs ist nicht aktiviert,
- das Beschleunigungspedal ist aktiviert,
- die Motorgeschwindigkeit ist größer als ein minimaler Geschwindigkeitsgrenzwert (S1) und
- die Ladung des Kondensatorsatzes (18) ist niedriger als ein weiterer Energiegrenzwert (C1);
und falls alle vorherigen Überprüfungen bestätigt sind, wird der Ladevorgang für den Kondensatorsatz mit einem Strom vom Wechselstromgenerator (4) ausgeführt, wobei der minimale Geschwindigkeitswert (S1) die Leerlaufgeschwindigkeit des Motors (2) ist, und der weitere Energiegrenzwert (C1) der maximale Energiegrenzwert ist, bis zu dem der Kondensatorsatz (18) geladen werden kann;
und die Methode weiter die Prüfschritte umfasst, ob:
a) die Motorgeschwindigkeit kleiner ist als der minimale Geschwindigkeitsgrenzwert (S1); und
b) die Kondensatorladung größer ist als der zweite Energiegrenzwert (C2); und falls alle Überprüfungen a) und b) bestätigt sind, der gesteuerte Schalter (20) geöffnet wird.

12. Methode gemäß Anspruch 11, die weiter den Schritt umfasst, dass der Kondensatorsatz (18) geladen wird, wenn sich das Fahrzeug in einer Verzögerungsphase befindet.

13. Methode gemäß Anspruch 11 oder 12, wobei der weitere Energiegrenzwert (C1) zwischen 60% und 90% der maximalen Kapazität der Kondensatoren gesetzt wird, und vorzugsweise zwischen 65% und 80%.

## Revendications

1. Système de stockage d'énergie électrique (12) pour un véhicule à moteur (2) comprenant une pédale de frein, une pédale d'accélérateur et un démarreur de moteur (3), un alternateur (4) et des équipements électriques (8) connectés à un circuit électrique (10) du véhicule, le système de stockage d'énergie électrique (12) comprenant au moins :
- un circuit électrique interne (14), destiné à être connecté audit circuit électrique (10),
- un ensemble batterie (22) ;
- un ensemble de condensateurs (18) comprenant au moins un condensateur et connecté au circuit électrique interne (14),
- un seul commutateur commandé (20) connecté entre l'ensemble batterie (12) et le circuit électrique interne (14), et
- une unité de commande (24) adaptée à commander le commutateur commandé (20) en fonction de l'état de charge de l'ensemble de condensateurs (18),
**caractérisé en ce que** ladite unité de commande (24) est configurée pour que, si la pédale de frein du véhicule à moteur n'est pas activée et si la pédale d'accélération est activée, l'ensemble de condensateurs (18) soit chargé en courant mis à disposition par l'ensemble alternateur (4) si la vitesse du moteur est supérieure à une valeur seuil de vitesse minimale (S1) et si la charge de l'ensemble de condensateurs (18) est inférieure à une autre valeur seuil d'énergie (C1), dans lequel ladite valeur seuil de vitesse minimale (S1) est une vitesse de ralenti du moteur (2) et ledit autre seuil d'énergie (C1) est la valeur seuil d'énergie maximale à laquelle l'ensemble de condensateurs (18) peut être chargé ;
dans lequel ladite unité de commande (24) est également configurée pour que, si la vitesse du moteur est inférieure à ladite valeur seuil de vitesse minimale (S1) et si la charge du condensateur est supérieure à une autre deuxième valeur seuil d'énergie (C2), le commutateur commandé (20) soit ouvert ; ladite deuxième valeur d'énergie seuil (C2) est une valeur seuil d'énergie minimale au-dessous de laquelle le commutateur commandé (20) doit être fermé ;
ladite unité de commande (24) étant configurée pour que, si la charge de l'ensemble de condensateurs (18) est supérieure à ladite valeur seuil d'énergie (C1), ledit commutateur commandé (20) soit ouvert.

2. Système selon la revendication 1, dans lequel l'unité de commande (24) est également adaptée à charger l'ensemble de condensateurs (18) lorsque le véhicule est en phase de décélération.

3. Système de stockage d'énergie électrique selon la revendication 1 ou 2, dans lequel ladite autre valeur seuil d'énergie (C1) est placée entre 60 % et 90 % de la valeur de charge maximale des condensateurs, et de préférence entre 65 % et 80 %.

4. Système de stockage d'énergie électrique selon la revendication 3, dans lequel si le moteur est arrêté et si la charge du condensateur est inférieure à un troisième seuil d'énergie (C3) nécessaire pour démarrer le moteur (6), il est nécessaire de démarrer le moteur (6) au moyen de l'ensemble batterie (22), le commutateur commandé (20) étant fermé.

5. Système de stockage d'énergie électrique selon l'une quelconque des revendications 1 à 3, dans lequel une diode (26) est connectée en parallèle au commutateur commandé (20), la diode conduisant directement en direction de l'ensemble batterie (22).

6. Système de stockage d'énergie électrique selon l'une quelconque des revendications précédentes, dans lequel l'ensemble de condensateurs (18) comprend des condensateurs connectés en série.

7. Système de stockage d'énergie électrique selon l'une quelconque des revendications précédentes, dans lequel ledit commutateur commandé (20) comprend des transistors de puissance connectés en parallèle.

8. Système de stockage d'énergie électrique selon l'une quelconque des revendications précédentes, dans lequel l'unité de commande (24) comprend des moyens de communication adaptés à communiquer avec une unité centrale du véhicule.

9. Système de stockage d'énergie électrique selon l'une quelconque des revendications précédentes, dans lequel l'ensemble de condensateurs (18), ledit commutateur commandé (20) et l'unité de commande (24) sont situés dans le même boîtier.

10. Moteur pour véhicule à moteur comprenant une pédale de frein, une pédale d'accélérateur et un démarreur de moteur (3), un alternateur (4) et des équipements électriques (8) connectés à un circuit électrique (10) du véhicule, le système de stockage d'énergie électrique (12), le moteur étant **caractérisé en ce qu'**il comprend un système de stockage d'énergie électrique (12) selon l'une quelconque des revendications 1 à 8.

11. Procédé de gestion d'un système de stockage d'énergie électrique (12) selon l'une quelconque des revendications 1 à 9, comprenant les vérifications/étapes suivantes :
- la pédale de frein du véhicule à moteur n'est pas activée,
- la pédale d'accélération est activée,
- la vitesse du moteur est supérieure à une valeur seuil de vitesse minimale (S1) et
- la charge de l'ensemble de condensateurs (18) est inférieure à une autre valeur seuil d'énergie (C1) ;
si toutes les vérifications précédentes sont effectuées, la charge de l'ensemble de condensateurs (18) en courant mis à disposition par l'ensemble alternateur (4) est exécutée, dans lequel ladite valeur seuil de vitesse minimale (S1) est une vitesse de ralenti du moteur (2) et ledit autre seuil d'énergie (C1) est la valeur seuil d'énergie maximale à laquelle l'ensemble de condensateurs (18) peut être chargé ;
le procédé comprenant en outre les étapes consistant à vérifier si :
a) la vitesse du moteur est inférieure à ladite valeur seuil de vitesse minimale (S1) ; et
b) la charge du condensateur est supérieure à ladite deuxième valeur seuil d'énergie (C2),
si toutes les vérifications précédentes a) et b) sont effectuées, le commutateur commandé (20) est alors ouvert.

12. Procédé selon la revendication 11, comprenant en outre l'étape consistant à charger l'ensemble de condensateurs (18) lorsque le véhicule est en phase de décélération.

13. Procédé selon la revendication 11 ou 12, dans lequel ladite autre valeur seuil (C1) est placée entre 60 % et 90 % de la valeur de charge maximale des condensateurs, et de préférence entre 65 % et 80 %.
